(19) Europäisches Patentamt
European Patent Office
Office européen des brevets

(11) Publication number: **0 041 315**
**A1**

(12) # EUROPEAN PATENT APPLICATION

(21) Application number: 81301591.4

(22) Date of filing: 10.04.81

(51) Int. Cl.[3]: C 08 L 67/02

(30) Priority: 29.05.80 US 154513

(43) Date of publication of application: 09.12.81 Bulletin 81/49

(84) Designated Contracting States: DE FR GB IT NL

(71) Applicant: E.I. DU PONT DE NEMOURS AND COMPANY
Legal Department 1007 Market Street
Wilmington, Delaware 19898(US)

(72) Inventor: Garrison, William Emmett, Jr.
701 Cardiff Road
Wilmington Delaware 19803(US)

(72) Inventor: Jones, Richard Hamilton
233 Cheltenham Road
Newark Delaware 19711(US)

(74) Representative: Myerscough, Philip Boyd et al,
J.A.Kemp & Co. 14, South Square Gray's Inn
London, WC1R 5EU(GB)

(54) **Polyethylene terephthalate molding blends and molded articles thereof.**

(57) Use of a selected combination of an ionic hydrocarbon copolymer and antimony trioxide in the presence of a halogenated flame retardant has been found to increase flame-retardancy without lowering thermal stability of a reinforced or filled polyethylene terephthalate molding blend which contains a sodium or potassium salt of an ionic hydrocarbon copolymer and a low molecular weight compound that is an ester, ketone, sulfone, sulfoxide, nitrile or amide.

EP 0 041 315 A1

Croydon Printing Company Ltd.

TITLE

"POLYETHYLENE TEREPHTHALATE MOLDING BLEND AND MOLDED ARTICLES THEREOF"

This invention relates to polyethylene terephthalate molding blends, and more specifically to such blends that may be molded to obtain shaped articles of improved flame-retardancy.

Historically, polyethylene terephthalate has been difficult to mold at molding temperatures below about 110°C because its crystallization rate is so slow and uneven that warped articles are obtained. Moreover the articles tend to stick to the mold and are difficult to remove. Recently, it has been found that polyethylene terephthalate articles of good quality can be obtained by molding at lower temperatures, e.g., 80-100°C, if certain materials are added to the resin prior to molding. These additive materials increase the rate of crystallization, and molded articles having smooth glossy surfaces that are easily removable from molds, are obtained when the materials are employed. The additive materials are 1) a sodium or potassium salt of an ionic hydrocarbon copolymer, i.e., an organic polymer containing pendant carboxyl groups and 2) a selected low molecular weight organic compound that is an ester, ketone, sulfone, sulfoxide, nitrile or amide.

However, when flame-retardant systems were employed with these improved crystallization rate materials in polyethylene terephthalate blends, it was found that articles molded from the blends either tended to exhibit inadequate thermal stability or the flame-retardant system did not operate effectively.

The thermal stability requirements for a flame-retardant composition of commercial value are such that PET molding resins need to be stable at a melt temperature of at least 292°C for a minimum of eight minutes or more. Many applications are even more demanding. A common flame-retardant system comprises a halogenated organic compound and antimony oxide which acts as a synergist. It was determined that the antimony oxide synergist was causing the blend to become thermally unstable when molded at moderate hold-up times, as evidenced by a decrease in physical property values and by high melt flow. Poor thermal stability was also found with antimony pentoxide and a variety of coated antimony oxides which were tested. On the other hand, a number of materials sometimes used as synergists including zinc oxide, zinc sulfide, zinc borate, stannous oxide, molybdenum oxide and molybdates were found not to be effective in polyethylene terephthalate.

A flame-retardant system that does not affect heat stability while operating efficiently is desirable, and is provided by this invention.

SUMMARY OF THE INVENTION

It was discovered that the sodium or potassium salt of the ionic hydrocarbon copolymer could prevent or retard the antimony oxide from causing the blend to become thermally unstable if enough of the salt were present in relation to the antimony oxide. However, at usual levels of antimony oxide present, so much salt was needed that the physical properties of the blend suffered. Reducing the level of antimony oxide synergist present was believed to reduce overall flame-retardancy of the blend. However it has now been found that small amounts of antimony oxide can be used effectively in

combination with halogenated aromatic flame-retardants, to render PET molding compositions flame-retardant without substantially reducing the thermal stability of such compositions, provided the compositions contain an ionic hydrocarbon copolymer whose concentration is at least four times as great as that of the antimony oxide.

Accordingly the polyethylene terephthalate molding blends of this invention are defined as

a) 20-90% by weight of blend of polyethylene terephthalate having an inherent viscosity of at least 0.4,

b) 0-50% by weight of blend of a reinforcing or filling material,

c) 1-16% by weight of blend of a sodium or potassium salt of an ionic hydrocarbon copolymer, provided the amount of copolymer present is sufficient to provide a $\Delta H_H/\Delta H_C$ ratio of less than 0.25 to the blend,

d) 1-12% by weight of blend of a low molecular weight organic compound that is an ester, ketone, sulfone, sulfoxide, nitrile or amide of no more than 30 carbon atoms, provided the amount of the compound is sufficient to lower the Tpk of the blend by at least about 4°C,

e) a halogenated flame-retardant consisting of an aromatic organic compound having at least one aromatic ring in which the compound has sufficient halogen bonded directly to aromatic ring carbons to provide flame-retardant properties, said flame-retardant present in said blend in an amount sufficient to provide an amount of halogen to the blend of between about 2 and 20% by weight based on weight of blend.

f) 0.1-3% by weight of blend of antimony trioxide, provided that the amount of antimony trioxide present is no more than one-fourth the amount of the ionic hydrocarbon copolymer present.

## THE DRAWING

The drawing is a graph of tensile strength versus ratio of ionic hydrocarbon copolymer to $Sb_2O_3$. The drawing is explained in Experiment C below.

## DESCRIPTION OF THE INVENTION

### The Polyethylene Terephthalate

The polyethylene terephthalate employed herein is one which has an inherent viscosity of at least 0.4 as measured by ASTM D-2857. The polyethylene terephthalate preferably has an upper limit on inherent viscosity of about 1.2. Inherent viscosity is measured at a concentration of 0.50g per 100ml in a 3:1 by volume ratio of methylene chloride and trifluoroacetic acid at 30°C. The polyethylene terephthalate can contain up to 50% by weight of other comonomers such as diethylene glycol, glutaric acid, 1,4-butanediol, polyalkylene oxide, cyclohexane dimethanol, and other diols. Preferably the polyethylene terephthalate is present in an amount between 35 and 70% by weight of blend.

### The Reinforcing or Filler Material

The reinforcing or filler material which may be employed herein includes glass fibers, graphite fibers, aramid fibers, glass beads, aluminum silicate, asbestos, mica, and the like, and combinations of them. The material is preferably present in an amount of between 15 and 50 percent by weight of blend.

The Crystallization Rate-Increasing Materials

Representative of the sodium or potassium salts of the ionic hydrocarbon copolymer (ionomer resin hereafter) are salts of an α-olefin of 2-5 carbon atoms and an α,β-ethylenically unsaturated carboxylic acid of 3-5 carbon atoms in which the carboxyl groups have been at least partially neutralized with $Na^+$ or $K^+$ cations, salts of copolymers of olefins and acrylic or methacrylic acids, or salts of copolymers of aromatic olefins and maleic anhydride. Preferably these materials include the sodium or potassium salt of ethylene/methacrylic acid copolymers (including both wholly or partially neutralized salts e.g., at least about 30% neutralized), the sodium salt of styrene/maleic anhydride copolymers (including both wholly or partially neutralized salts e.g., at least about 30% neutralized) and sodium versatate. In the copolymers listed above the olefin or aromatic olefin moiety ordinarily comprises 50-98 percent by weight of the copolymer, and preferably 80-98 percent. An especially preferred material is the sodium salt of ethylene/methacrylic acid copolymer. The copolymers may be prepared by conventional high pressure polymerization technology.

Representative of the low molecular weight organic compounds are aromatic esters, or organic ketones, sulfones, sulfoxides, nitriles or amides. Preferably the organic ester is the product of an aromatic carboxylic acid of 7-11 carbon atoms containing at least 1 carboxyl group per aromatic nucleus, and an alcohol selected from those of the formula $(HOCH_2)_xR'$ wherein x is 1, 2 or 3 and R' is a hydrocarbon radical of 2-15 carbon atoms

(preferably 2-10 carbon atoms) or those of the formula $HO-(R''O)_yR'''$ wherein y is a cardinal number between 1 and 15 and preferably between 1 and 8, R" is a hydrocarbon radical of 2-15 carbon atoms (preferably 2-8 carbon atoms) and R''' is -H or a hydrocarbon radical of 2-20 carbon atoms (preferably 2-12 carbon atoms). Preferred organic esters are those in which the aromatic carboxylic acid and the aliphatic carboxylic acid are hydrocarbon acids containing 1-3 carboxyl groups and the alcohols are aliphatic. In other words, the R groups in the alcohols are alkyl or alkylene depending upon the particular R group. Preferably also when the carboxylic acids contain two or more carboxyl groups, the carboxyl groups are all reacted to form ester (COO) linkages, that is, there will be no free carboxyl groups present in the ester. Preferably, all the hydroxyl groups of the alcohols will also be reacted to form ester (COO) linkages, that is, there will be no free hydroxyl groups present in the ester.

A particularly preferred class of esters are those in which the acid is benzoic acid and the alcohol is $(HOCH_2)_2-R'$ wherein R' is alkylene of 4-6 carbon atoms (preferably neopentyl glycol) or $HO(R''O)_yH$ wherein R" is ethylene or propylene, and y is 2 or 3.

While the organic esters are preferred for use herein, other compounds which may be employed include

organic ketones of the formula $R\overset{O}{\overset{\|}{C}}R$,
organic sulfones of the formula $R_2SO_2$,
organic sulfoxides of the formula $R_2SO$,
organic nitriles of the formula RCN, or

organic amides of the formula $R\overset{\overset{O}{\|}}{C}NR'R$ or $R\overset{\overset{O}{\|}}{S}ONR'R$ wherein each R can be the same as or different from any other R and a hydrocarbyl group of 1-25 carbon atoms, while R' is hydrogen or a hydrocarbyl group of 1-25 carbon atoms.

Preferred ketones, sulfones, sulfoxides, nitriles and amides are those in which the R groups in the formulas provided further above for these organic compounds are aryl groups of 6-10 carbon atoms or alkyl groups of 1-10 carbon atoms.

Specific compounds within these definitions are listed following: diphenyl carbonate, dibenzoate of neopentyl glycol, dibenzoate of triethylene glycol, dibenzoate of diethylene glycol, dibenzoate of dipropylene glycol, tris-2-ethyl hexyl trimellitate, butyl carbitol adipate, triethylene glycol caprate-caprylate, phenyl benzoate, pentaerythritol tetrabenzoate, trimethylolethane tribenzoate, dioctylphthalate, diisodecyl phthalate, benzophenone, 4-fluorobenzophenone, diphenyl sulfone, N-ethyl-o,p-toluene sulfonamide, tolyl sulfoxide, lauryl nitrile, and erucyl nitrile.

The ionomer resin and low molecular weight organic compound aid in obtaining molded articles of high surface gloss at molding temperatures below 110°C by increasing the rate of crystallization of polyethylene terephthalate. The ionomer resin is believed to primarily aid in increasing the rate of crystallization while the low molecular weight organic compound is believed to primarily improve the mobility of the polyethylene terephthalate in its

melted state by reducing the viscosity of the polymer mixture. Both are necessary to obtain the high gloss found in the articles molded from the composition.

The amount of the salt present is an amount which will result in a $\Delta H_H/\Delta H_C$ ratio of the blend less than 0.25. To find the $\Delta H_H/\Delta H_C$, polyethylene terephthalate is molded at 70°C into 1/16" thick bars. The bars are heated at a rate of 10°C per minute and at between 95°C and 120°C an exotherm (termed $\Delta H_H$) is recorded on a differential scanning calorimeter (DSC) cell attached to a Du Pont 900 Differential Thermal Analysis (DTA) device. The bar is heated to 290° (which is above its melting point) and the melted sample cooled at 10°C/minute. Another exotherm at between about 200-225°C (termed $\Delta H_C$) is the exotherm recorded on freezing of the sample. It has been found that the $\Delta H_H/\Delta H_C$ ratio is a convenient method of measuring the degree of crystallization.

The Tpk of the blends is the temperature at which heat evolves most rapidly during the heating cycle recited in the previous paragraph. The amount of the low molecular weight compound present in the blend is an amount which lowers the Tpk of the blend by at least 4°C over that of an identical blend that does not contain the compound.

The ratio of the salt to the low molecular weight compound will generally be between 2:1 and 1:3.

The Halogenated Flame-Retardant

The halogenated flame-retardant consists of an aromatic compound which contains halogen, preferably bromine or chlorine atoms, attached directly to the aromatic ring or rings. The bromine content, when bromine is present, is at least 25% of the weight of the compound; and the chlorine content,

when chlorine is present, is at least 40% of the weight of the compound. In addition, the flame-retardant compound should be substantially stable at up to 300°C and should not cause degradation of polyethylene terephthalate. When the compound contains bromine, the amount of the bromine present in the blend should preferably be between 2-20% by weight of blend, and most preferably 5-12%. When the compound contains chlorine, the amount of the chlorine present should preferably be between 3-20% by weight of blend and most preferably 5-12%.

Representative flame-retardants include decabromodiphenyl ether, octabromodiphenyl ether, ethylene bis-(tetrabromophthalimide), brominated polystyrene, poly(dibromophenylene oxide), and analogous chlorinated compounds, and the like. Polymeric retardants may have molecular weight up to 200,000 or more.

Antimony Trioxide ($Sb_2O_3$)

The antimony trioxide used herein is ordinarily added as an 80% concentrate in polyethylene. However it may be added in solid or particulate form if desired, or it may be added as a concentrate in the ionomer resin. Preferably it will be present in an amount of between 0.3 and 2% by weight of blend, and most preferably between 0.3 and 1%.

Other Additives

In addition to the components discussed hereinabove, the blends of this invention may contain additives commonly employed with polyester resins, such as colorants, mold release agents, antioxidants, tougheners, nucleating agents, ultraviolet light and heat stabilizers and the like.

Preparation

The blends of this invention are prepared by blending the components together by any convenient means to obtain an intimate blend. Neither temperature nor pressure is critical. For example, the polyethylene terephthalate can be mixed dry in any suitable blender or tumbler with the other components and the mixture melt-extruded. The extrudate can be chopped. If desired the reinforcing or filling agent can be omitted initially and added after the first melt extrusion, and the resulting mixture can then be melt extruded.

EXPERIMENTS AND EXAMPLES

In the Experiments and Examples which follow, percents are based on total blend unless otherwise noted.

Properties of molded test bars were measured according to the following procedures:

Tensile strength and elongation were measured at 0.2 inches per minute on injection molded bars by ASTM Method D638. Test bars were 1/8" ASTM-638-Type I bars.

Unnotched impact strength was measured by cutting 5 x 1/2 x 1/8" injection molded bars to the size specified for the Izod test in ASTM Method D256, but without notching the bars, and otherwise running the test by Izod method ASTM D256.

Flame-retardancy was measured by Underwriter's Laboratory Method UL-94 vertical burning test on 1/2" x 5" x 1/32" bars, unless otherwise noted. The bars were aged 7 days at 70°C. and kept dry before testing, unless otherwise noted. Burning tests were carried out at about 20% relative humidity. Results are stated as total burning time for 5 samples.

In the Experiments and Examples, the mode of preparation and testing was as follows:

All the ingredients were dry blended manually and the resulting mixture was then extruded through a two-stage two-inch single screw extruder at a melt temperature of 285-300°C and a vacuum of 25-28 inches. The extruded strand was quenched in water and cut into pellets which were then dried about 105°C in a vacuum oven for 16 hours. The dried pellets were injection molded into test bars using a 6 oz. Van Dorn reciprocating screw machine with a fast ram speed and a mold cavity temperature of about 105°C. the mechanical properties and flammability ratings were determined on these test bars.

Ingredients used in the Experiments and Examples are listed as follows:

| | | |
|---|---|---|
| PET | - | Polyethylene terephthalate homopolymer resin having an inherent viscosity of 0.6 as measured at 30°C at a concentration of 0.50g/100 ml in a mixture of 1 part trifluoroacetic acid and 3 parts of dichloromethane. The resin was dried to less than 0.5% water before use. |
| Glass Fiber | - | Chopped to a length of 1/8 to 3/6 inches |
| Neopentyl Glycol Dibenzoate | - | |
| Ionomer Resin (ionic hydrocarbon copolymer) | - | A copolymer of ethylene and 15% by weight methacrylic acid, 60% neutralized with sodium. |
| Brominated Polystyrene | - | Having a bromine content of 68% by weight and a softening point of 220°C. |
| Antimony Trioxide | - | $Sb_2O_3$ added as an 80% concentrate in polyethylene. |

| | |
|---|---|
| Epoxide | - A condensation product of epichlorohydrin and Bisphenol A having a molecular weight of 4000-8000 and 0.53% oxirane oxygen. Obtained from Shell Chemical Company. |
| Polyethylene Wax | - Mold release agent |
| Antioxidant | - Tetrakis [methylene(3,5-di-tert-butyl-4-hydroxyhydrocinnamate)-methane] |
| Ethylene bis-(tetrabromo-phalimide) | - Flame-retardant |
| Octabromodiphenyl ether | - Flame-retardant |

Percents are by weight unless otherwise specified.

Experiment A

Reducing the level of brominated flame-retardant is highly desirable to improve properties and property retention. However, a synergist such as antimony oxide must be added so that the composition can still be rated V-O in flammability. Table 1 lists experiments where 3% antimony oxide was added to a composition containing ethylene bis(tetrabromophthalimide) as the halogenated flame-retardant. At the lower (0-2%) levels of ionomer resin used the composition has poor stability, even at 280°C barrel temperature, as evidenced by the lower values for tensile strength and tensile elongation. Increasing the amount of ionomer improves resin stability as seen by comparing the tensile strength and elongation values of Experiments A-3, A-4 and A-5; however, the tensile strength and elongation values obtained in Experiment A-5 are not as good as they could be and further improvement is desirable.

TABLE 1

Composition

| | |
|---|---|
| PET | balance |
| Ionomer Resin | varied |
| Antimony Trioxide | 3.0% |
| Neopentyl Glycol Dibenzoate | 3.4% |
| Ethylene bis(tetrabromophthalamide) | 7% |
| Glass Fibers | 30% |
| Epoxide | 0.6% |
| Antioxidant | 0.2-0.6% |
| N-stearyl erucamide | 0.7% |

| Experiment # | A-1 | A-2 | A-3 | A-4 | A-5 |
|---|---|---|---|---|---|
| % Ionomer Resin Present | 0 | 2.0 | 4.0 | 6.0 | 8.0 |
| Flammability, UL 94(1) | | | | | |
| Total Burn Time, seconds | 0 | 0 | 0 | 0 | 5 |
| Rating | V-O | V-O | V-O | V-O | V-O |
| Tensile Strength, Kpsi | | | | | |
| 3 Minutes(2) | 18.2 | 16.7 | 16.8 | 17.9 | 18.0 |
| 6 Minutes(3) | 11.4 | 9.6 | 13.6 | 16.8 | 17.9 |
| Tensile Elongation, % | | | | | |
| 3 Minutes(2) | 1.45 | 1.30 | 1.45 | 1.67 | 1.88 |
| 6 Minutes(3) | 0.85 | 0.65 | 1.12 | 1.55 | 1.88 |

(1) Run as molded at 1/16" thickness

(2) Molded with 3 minute residence time at 280°C barrel temperature

(3) Molded with 6 minute residence time at 280°C barrel temperature

Experiment B

In another set of experiments, compositions B-1, B-2 and Example 1 (a composition of this invention) containing the ingredients recited below

in Table 2 were prepared and tested, with the test results shown in Table 2.

TABLE 2

COMPOSITIONS CONTAINING 2-3% ANTIMONY OXIDE AND BROMINATED POLYSTYRENE

| Example # | B-1 | B-2 | 1 |
|---|---|---|---|
| Formula, % by Wt.:(1) | | | |
| PET | 45.6 | 43.2 | 45.7 |
| Ionomer Resin | 8.0 | 10.0 | 8.0 |
| Neopentyl Glycol Dibenzoate | 3.4 | 3.4 | 3.4 |
| Brominated Polystyrene | 8.0 | 8.0 | 9.0 |
| Antimony Trioxide | 3.0 | 3.0 | 2.0 |
| Ratio, Ionomer: $Sb_2O_3$ | 2.67 | 3.33 | 4.0 |
| Flammability, UL 94(2) | | | |
| Total Burn Time | 35 | 22 | 12 |
| Rating | V-O | V-O | V-O |
| Tensile Strength, Kpsi | | | |
| Mold Cycle-290° barrel temp 10 min residence time | 16.4 | 14.3 | 17.4 |
| Mold Cycle-300° barrel temp 10 min residence time | 7.6 | 9.0 | 11.7 |
| Tensile Elongation, % | | | |
| Mold Cycle-290° barrel temp 10 min residence time | 1.55 | 1.35 | 1.93 |
| Mold Cycle-300° barrel temp 10 min residence time | 0.73 | 0.95 | 1.18 |

(1) Other ingredients were 30% glass fibers, 0.6% Epoxide, and 0.6-1.0% Antioxidant.

(2) Samples were 1/16" thick and tested as molded.

The data in Table 2 show that as the amount of ionomer resin is increased while the amount of $Sb_2O_3$ is held constant (comparing Experiments B-1 and B-2), tensile strength and elongation properties are better retained at the higher processing temperatures.

The data also show that as the level of ionomer resin is held constant, decreasing the amount of $Sb_2O_3$ also improves properties (comparing Experiment B-1 and Example 1). The improvement is more pronounced at the 300°C barrel temperatures used in the more severe molding cycle.

Experiment C

In this series of experiments, all blends listed in Table 3 below are identical except for ratio of ionomer resin to $Sb_2O_3$. In the blend labeled C-1, no ionomer resin was present and as seen from the Table, the blend was so unstable that it could not be molded under the more severe molding conditions.

In the blends labeled 1-7, the blends are examples of blends of this invention. The data in Table 3 show that at relatively low levels of $Sb_2O_3$ (0.6 to 1%), the blends had in general good flame-retardancy and much better thermal stability than that of blend C-1.

In these experiments, Mold Cycle 1 was run with the barrel temperatures set at 285°C using an overall cycle time of about 40 seconds to give an approximate residence time in the machine of 3 minutes; while mold Cycle 2 was run with the barrel temperatures set at 300°C using an overall cycle of 2 minutes to give an approximate residence time in the machine of about 10 minutes.

The molding conditions of cycles 1 and 2 were selected to show the effect of temperature on stability of the resin. The more severe conditions, i.e., higher temperatures, caused a reduction in the tensile strength and elongation values as compared with the values obtained at the milder conditions of cycle 1.

TABLE 3

| Blend | C-1 | 1 | 2 | 3 |
|---|---|---|---|---|
| Formula, % by Wt.:(1) | | | | |
| PET | 50.8 | 47.0 | 48.6 | 47.8 |
| Ionomer Resin | 0 | 4.4 | 3.0 | 3.0 |
| Neopentyl Glycol Dibenzoate | 3.2 | 3.0 | 3.1 | 3.0 |
| Brominated Polystyrene | 14.0 | 13.0 | 13.0 | 14.0 |
| Antimony Trioxide | 0.6 | 1.0 | 1.0 | 0.6 |
| Ratio, Ionomer Resin: $Sb_2O_3$ | 0 | 4.38 | 4.01 | 5.0 |
| Flammability, U.L. 94 | | | | |
| Total Burn Time, Sec. | 14 | 15 | 39 | NM(4) |
| Rating | V-O | V-O | V-O | NM |
| Tensile Strength, Kpsi | | | | |
| Mold Cycle 1 | 11.4 | 21.2(3) | 21.6 | 22.4 |
| Mold Cycle 2 | (2) | 14.3 | 12.7 | 18.7 |
| Tensile Elongation, % | | | | |
| Mold Cycle 1 | 1.0 | 2.3 | 2.6 | 2.55 |
| Mold Cycle 2 | (2) | 1.35 | 1.2 | 1.93 |

TABLE 3 (CONTINUED)

| Blend | 4 | 5 | 6 | 7 |
|---|---|---|---|---|
| Formula, % by Wt.:(1) | | | | |
| PET | 46.7 | 46.1 | 45.0 | 44.4 |
| Ionomer Resin | 4.1 | 4.8 | 6.0 | 8.0 |
| Neopentyl Glycol Dibenzoate | 3.0 | 2.9 | 2.8 | 2.8 |
| Brominated Polystyrene | 14.0 | 14.0 | 14.0 | 12.0 |
| Antimony Trioxide | 0.6 | 0.6 | 0.6 | 1.0 |
| Ratio, Ionomer Resin: $Sb_2O_3$ | 6.9 | 8.0 | 10.0 | 8.0 |
| Flammability, U.L. 94 | | | | |
| Total Burn Time, Sec. | NM | 40 | NM | NM |
| Rating | NM | V-O | NM | NM |
| Tensile Strength, Kpsi | | | | |
| Mold Cycle 1 | 21.9 | 21.8 | 21.8 | 21.0 |
| Mold Cycle 2 | 20.0 | 19.7 | 21.0 | 19.0 |
| Tensile Elongation, % | | | | |
| Mold Cycle 1 | 2.50 | 2.50 | 2.43 | 2.67 |
| Mold Cycle 2 | 2.18 | 2.25 | 2.45 | 2.28 |

(1) All compositions contain 30% glass, 0.6% Epoxide, 0.5-0.7% polyethylene wax, and 0.1-0.3% Antioxidant.

(2) Too unstable to mold under severe cycle.

(3) 10 minute hold-up time at barrel temperature of 280°C.

(4) NM=Not Measured

The tensile strength on molded bars of blends of Table 3 and of similar blends, as well as the blends of Experiment C-1 are plotted on the drawing which is a graph of tensile strength versus Ionomer Resin:$Sb_2O_3$ ratio. As seen from the graph, as the ratio increases, the tensile strength increases. A ratio above 4:1 provides good tensile strength. A ratio above 5:1 provides better tensile

strength and at a ratio of 7:1 tensile strength levels off.

Experiment D

This Experiment compares blends which employ different flame-retardants. Both blends described in Table 4 below are blends of this invention. Conditions used for Mold Cycles 1 and 2 are described in Experiment C.

TABLE 4

| | 1 | 2 |
|---|---|---|
| Formula, Wt. %(1) | | |
| PET | 50.0 | 47.9 |
| Ionomer resin | 3.1 | 3.0 |
| Neopentyl glycol dibenzoate | 3.2 | 3.0 |
| Ethylene bis(tetrabromo-phthalimide) | 12.0 | --- |
| Octabromobiphenyl ether | --- | 14.0 |
| Antimony trioxide | 0.5 | 0.5 |
| Ratio, Ionomer Resin: $Sb_2O_3$ | 6.2 | 6.0 |
| Flammability, UL 94 | | |
| Total burn time, secs. | 93 | 9 |
| Rating | V-I | V-O |
| Tensile Strength, Kpsi | | |
| Mold Cycle 1 | 22.8 | 23.2 |
| Mold Cycle 2 | 14.7 | 14.1 |
| Tensile Elongation, % | | |
| Mold Cycle 1 | 2.9 | 2.05 |
| Mold Cycle 2 | 1.35 | 1.1 |

(1) Composition also contains 30% glass fibers, 0.6% Epoxide, 0.5% Polyethylene wax, and 0.3% Antioxidant.

CLAIMS

1. A polyethylene terephthalate molding blend comprising a polyethylene terephthalate and, as additive materials to increase the rate of crystallization, a sodium or potassium salt of an ionic hydrocarbon copolymer and a low molecular weight compound that is an ester, ketone, sulfone, sulfoxide, nitrile or amide, characterised in that the blend comprises:

a) 20 to 90% by weight of the blend of a polyethylene terephthalate having an inherent viscosity of at least 0.4;

b) 0 to 50% by weight of the blend of a reinforcing or filling material;

c) 1 to 12% by weight of the blend of a sodium or potassium salt of an ionic hydrocarbon copolymer, provided the amount of copolymer present is sufficient to provide a $\Delta H_H/\Delta H_c$ ratio of less than 0.25 to the blend;

d) 1 to 12% by weight of blend of a low molecular weight organic compound that is an ester, ketone, sulfone, sulfoxide, nitrile or amide of no more than 30 carbon atoms, provided the amount of the compound is sufficient to lower the Tpk of the blend by at least 4°C;

e) a halogenated flame-retardant consisting of an aromatic organic compound having at least one aromatic ring in which the compound has sufficient halogen bonded directly to the aromatic ring carbons to provide flame-retardant properties, said flame-retardant present in said blend in an amount sufficient to provide an amount of halogen to the blend of between 2 and 20% by weight based on weight of the blend; and

f) 0.1 to 3% by weight of the blend of antimony

trioxide, provided that the amount of antimony trioxide present is no more than one-fourth the amount of the ionic hydrocarbon copolymer c).

2. A blend according to claim 1 wherein the reinforcing or filling material b) is present in an amount of between 15 and 50 percent by weight of blend and is glass fiber.

3. A blend according to claim 1 or 2 wherein the ionic hydrocarbon copolymer c) is the salt of an $\alpha$-olefin of 2 to 5 carbon atoms and an $\alpha,\beta$-ethylenically unsaturated carboxylic acid of 3 to 5 carbon atoms in which the carboxyl groups have been at least partiallly neutralized with $Na^+$ or $K^+$ cations.

4. A blend according to claim 1, 2 or 3 wherein component d) is an aromatic ester.

5. A blend according to any one of the preceding claims wherein component e) is one in which the halogen is bromine.

6. A blend according to claim 5 wherein component e) is a brominated polystyrene.

7. Process for preparing a blend as claimed in any one of the preceding claims characterised by mixing the components of the blend and then melt-extruding the mixture.

8. Molded articles prepared by melting a blend as claimed in any one of claims 1 to 6, placing the melted blend into a mold, and then allowing the blend to solidify.

EFFECT OF IONOMER: $Sb_2O_3$
RATIO ON TENSILE STRENGTH

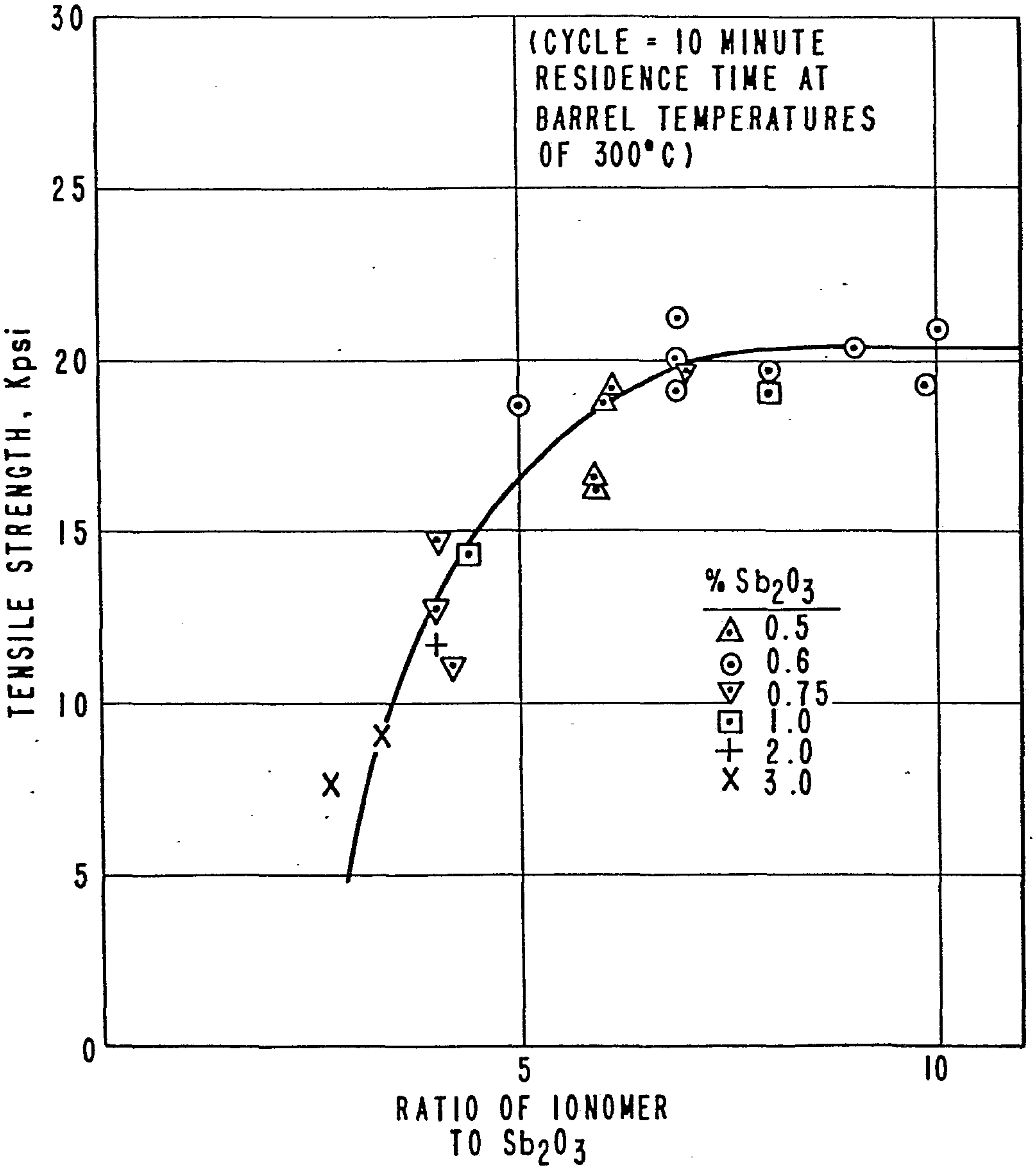

0041315

European Patent Office

# EUROPEAN SEARCH REPORT

Application number
EP 81 30 1591

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| | FR - A - 2 334 715 (GENERAL ELECTRIC)<br>* claims 1-9; page 5, lines 26-41 *<br>-- | 1-3,5, 7,8 | C 08 L 67/02 |
| | FR - A - 2 418 254 (E.J. DU PONT)<br>* claims 1-11 *<br>-- | 1-4,7, 8 | |
| P | GB - A - 2 040 953 (GENERAL ELECTRIC)<br>* claims 1-12 *<br>----- | 1,2,5 -8 | TECHNICAL FIELDS SEARCHED (Int. Cl.3)<br>C 08 L 67/02 |

CATEGORY OF CITED DOCUMENTS
X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-09-1981 | DECOCKER |

EPO Form 1503.1 . 06.78